# FASCICULE DE BREVET EUROPEEN

(11) **EP 1 422 872 B1**
(45) Date de publication et mention de la délivrance du brevet: **30.05.2007**
(21) Numéro de dépôt: 03103678.3
(22) Date de dépôt: 03.10.2003
(51) Int. Cl.: H04L 12/26, H04L 12/58

(54) **Procédé et dispositif modulaire de traçage d'un message multimédia à travers un réseau de télécommunications**
Modularverfahren und Vorrichtung zur Verfolgbarkeit einer Multimedianachricht durch ein Telekommunikationsnetz
Modular method and device for the tracing of a multimedia message through a telecommunications network

(30) Priorité: 20.11.2002 FR 0214556
(43) Date de publication de la demande: 26.05.2004
(73) Titulaire: Societé Française du Radiotéléphone, 92915 Paris la Défense Cedex (FR)
(72) Inventeur: MARSOT, Rodolphe, 38000, GRENOBLE (FR); SAN SEVERINO, Jean-Charles, 38330, SAINT NAZAIRE LES EYMES (FR)
(74) Mandataire: Schmit, Christian Norbert Marie

(56) Documents cités:
- EP-A- 0 866 586
- WO-A-99/18695
- WO-A2-02/19069
- US-A- 5 841 982
- US-B1- 6 418 298
- 3GPP: '3rd Generation Partnership Project; Technical Specification Group Services and System Aspects Service Aspects: Stage 1 . Multimedia Messaging Service' 3G TS 22.140 3.1.0, XX, XX, [en ligne] Juin 2000, INTERNET, pages 1 - 12, XP000863909 Extrait de l'Internet: <URL:www.arib.or.jp/IMT-2000/>
- 3GPP: '3rd Generation Partnership Project; Technical Specification Group Terminals; Multimedia Messaging Service (MMS); Functional description; stage 2' 3G TS 23.140 V3.0.1, XX, XX, [en ligne] Mars 2000, INTERNET, pages 1 - 25, XP000863907 Extrait de l'Internet: <URL:www.arib.or.jp/IMT-2000/>

## Description

L'invention a pour objet un procédé et un dispositif modulaire de traçage d'un message multimédia à travers un réseau de télécommunications. Le domaine de l'invention est celui des télécommunications et plus précisément celui de la communication via des messages ayant un contenu multimédia, de tels messages sont aussi appelés messages multimédia, ou messages MMS.

Un but de l'invention est de pouvoir déterminer les performances d'un systèmes d'échange de messages multimédia.

Un autre but de l'invention est de pouvoir disposer d'outils de mesure / simulation lors de phases de développement d'un système d'échange de messages multimédia.

Un autre but de l'invention est de pouvoir effectuer des mesures sur un système d'échanges de messages multimédia celui-ci étant en phase d'exploitation.

Un autre but de l'invention est de déterminer un délai d'acheminement d'un message multimédia.

Un autre but de l'invention est de détecter les altérations subies par un message multimédia au cours de son acheminement.

Dans l'état de la technique on connaît des procédés et dispositifs qui permettent d'effectuer des simulations de charges sur des serveurs HTTP (Hyper Text transfer Protocol, protocole de transfert hypertexte). Un tel procédé met en oeuvre des programmes appelés robots qui interrogent un serveur HTTP en émettant des requêtes vers ce serveur. Il s'agit alors d'un processus client serveur dans lequel seuls sont impliqués le robot / client et le serveur. Il est donc ainsi possible de savoir si l'interaction entre le serveur et le robot se déroule bien, mais on n'obtient aucune information sur les autres communications mises en oeuvre lors d'échanges de messages multimédia de type MMS. En particulier on n'obtient aucune information sur des délais de transmission d'un message multimédia, un tel délai se mesurant de sa date d'émission par un client à sa date de réception par le destinataire. De même avec une telle solution il est impossible de déterminer quels types de messages multimédia sont perdus, le type d'un message variant avec la nature et la quantité des données qu'il comporte. Avec une telle solution, il est encore impossible de savoir si un message multimédia émis a été correctement reçu, c'est-à-dire si le message reçu est identique au message émis. Enfin les solutions de l'état de la technique n'envisagent que des communications selon le protocole HTTP alors que dans les faits ils existent de nombreux protocoles permettant de transmettre un message multimédia.

Dans l'état de la technique on connaît aussi le document 3GPP: "3G TS 22.140 3.1.0" INTERNET ARTICLE, juin 2000 (2000-06), XP000863909 INTERNET Extrait de l'Interenet: URL:www.arib.or.jp/IMT-2000/. Ce document traitant de manière générale de l'acheminement de message multimédia par un réseau.

On résout ces problèmes mettant en oeuvre un procédé / dispositif modulaire, chaque module ayant un rôle déterminé. Ainsi un module de génération produit et émet sur un réseau de télécommunication des messages multimédia de type variable en utilisant des protocoles de communications variés parmi lesquels on peut citer HTTP, WAP (Wireless Application Protocol, pour protocole d'application sans fil), SMTP (Simple Mail Transfer Protocol, pour protocole simple de transfert de message électronique), SOAP (Simple Object Access Protocol, pour protocole simple d'accès à des objets), pour ne citer que les plus courants. Un tel module de génération est alors capable de simuler le fonctionnement d'un grand nombre de clients. Il est en effet possible d'émettre un message multimédia depuis un ordinateur de bureau, un ordinateur de poche, un assistant personnel, un téléphone mobile, pour ne citer que les clients les plus courants. Le message produit comporte au moins un corps et un champ objet aussi appelé champ sujet. Le module de génération renseigne le champ objet en fonction du type de message multimédia produit. Ainsi le champ objet comporte un identifiant de message multimédia, une date de production émission du message multimédia, un code instruction pour un module de récupération, et/ou une somme de contrôle du message multimédia. Le module de génération émet aussi, vers un module d'analyse, des informations sur les messages multimédia qu'il produit et émet.

Ces messages multimédia produits et émis transitent via le réseau de télécommunication et sont reçus et traités normalement par un serveur relais de messages multimédia. Le traitement consiste en un stockage du message et en l'envoi d'un message de notification au destinataire du message multimédia reçu et stocké. Ce message de notification comporte au moins le champ objet dudit message multimédia.

Ce message de notification est intercepté par un module d'interception qui soit lui laisse poursuivre son acheminement vers son destinataire s'il ne s'agit pas d'un message produit par le module de génération, soit, dans le cas contraire, l'envoie vers un module de récupération de messages multimédia.

Le module de récupération est alors en connaissance d'informations lui permettant d'interroger le serveur relais pour récupérer les messages multimédia produits et émis par le module de génération. Cette récupération permet d'obtenir des informations, notamment sur l'intégrité des messages multimédia récupérés, et sur les temps de transmission. Les informations ainsi obtenues sont alors transmises à un module d'analyse déjà en possession d'informations sur les messages émis. La corrélation entre les informations sur les messages émis et les informations sur les messages récupérés permet donc d'obtenir des statistiques modélisant le comportement du réseau de télécommunication dans sa fonction d'acheminement de messages multimédia.

Ainsi ce procédé/dispositif peut être utilisé soit lors de l'intégration d'un service MMS pour réaliser des tests de charge et d'endurance, soit en production pour mesurer la disponibilité réelle du système. Un test de charge consiste à déterminer le comportement d'un serveur lorsqu'il est très sollicité en peu de temps. Un test d'endurance consiste à déterminer le comportement du serveur sur une longue période. On peut bien sûr combiner charge et endurance pour déterminer le comportement d'un serveur très sollicité pendant une longue période.

L'invention est divulguée dans les revendications indépendantes.

L'invention sera mieux comprise à la lecture de la description qui suit et à l'examen des figures qui l'accompagnent. Celles-ci sont présentées à titre indicatif, nullement limitatif de l'invention. Les figures montrent :
- figures 1a et 1b : une illustration d'étapes du procédé selon l'invention ;
- figure 2a : une illustration d'une architecture du dispositif selon l'invention ;
- figure 2b : une illustration de moyens utiles à la mise en oeuvre du procédé selon l'invention ;
- figure 3a à 3f : une illustration des structures des messages et requêtes émis et reçus lors de la mise en oeuvre du procédé selon l'invention ;
- figure 4 : une illustration d'un fonctionnement multiprocessus du module de génération.

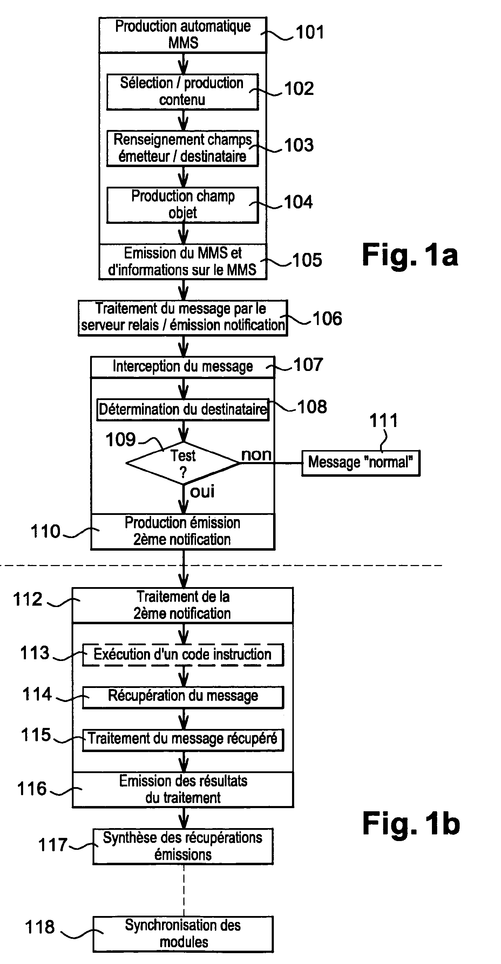

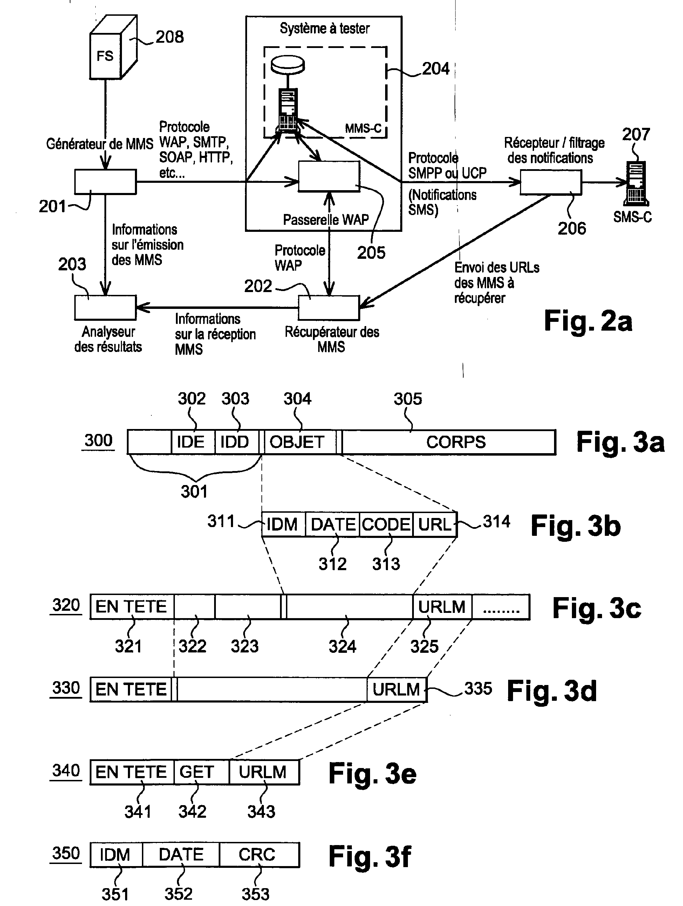

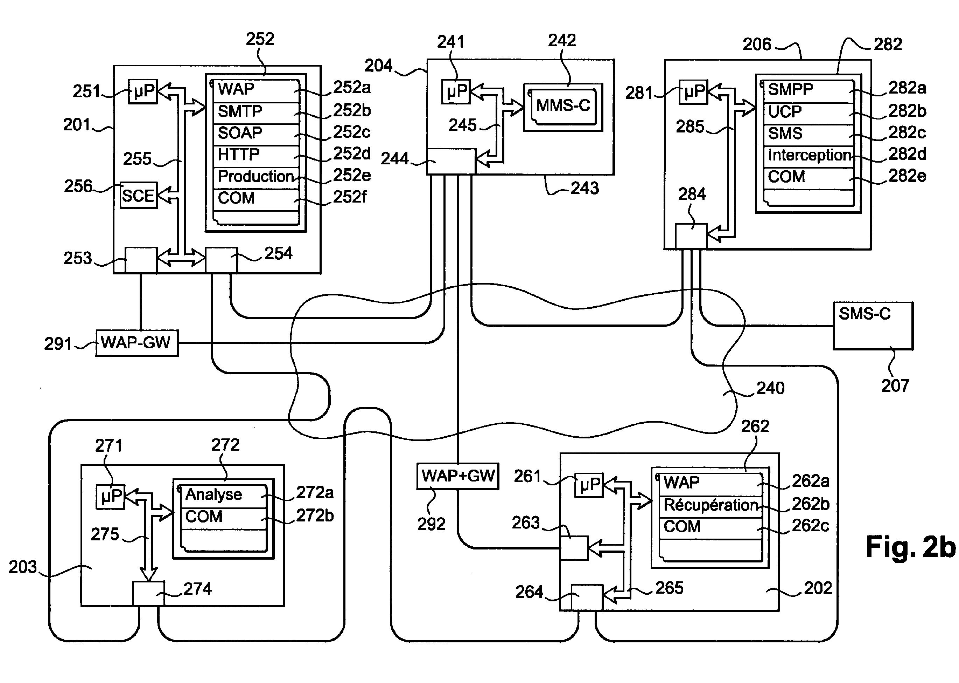

La figure 1 illustre des étapes du procédé selon l'invention. Chaque étape ou groupe d'étapes est mis en oeuvre par un module car il s'agit d'un procédé / dispositif modulaire. Chaque module a une ou des fonctions à remplir. Dans la pratique, et tel qu'illustré par le figure 2, chaque module est en fait une machine, de type serveur, indépendante. Une telle machine comporte alors un microprocesseur, des mémoires de programme stockage et travail, et des moyens de connexions notamment à un réseau de télécommunications. Dans ce cas la mémoire de programme d'un serveur/module comporte des codes instructions permettant la mise en oeuvre des fonctions du module. Dans ce cas encore les modules communiquent via un réseau de télécommunication, ou un réseau local selon la distance séparant les serveurs. Lorsque rien n'est précisé on considère que deux modules communiquent entre eux via un protocole de type TCP/IP par exemple. Toutefois il se peut, dans des variantes, que des fonctions correspondant à plusieurs modules soient exécutées par un même serveur. Cela signifie alors que la mémoire de programme d'un tel serveur comporte des codes instructions correspondant aux fonctions de plusieurs modules. Dans ce cas les modules communiquent alors via des organes internes, bus et mémoires, du serveur. Dans la description, lorsque l'on prête une action à un module, cette action est donc en fait réalisée par un microprocesseur commandé par des codes instructions. Dans une variante, il s'agit d'un composant spécialisé/dédié à la réalisation de la fonction du module.

Par message multimédia on entend un message de type message MMS (Multimédia Message Service). On rappelle ici que le service MMS est un service de communication interpersonnel, offrant des mécanismes internes de stockage et de renvoi de messages multimédia. Ces messages multimédia peuvent contenir du texte, du son (sous forme de fichiers au format mp3, ogg, wav ou autre), des images fixes ou animées (sous forme de fichiers aux formats jpeg, gif, mpeg, divx, ou autre), le tout étant mis en forme par le langage de présentation SMIL (Synchronised Multimedia Integration Language, pour langage de synchronisation et d'intégration multimédia). D'autres langages de mise en forme peuvent être utilisés, HTML (Hyper Text Markup Language, pour langage de balisage hypertexte) ou les feuilles de style cascadées (CSS) étant les plus connus parmi ces autres langage.

Ces messages multimédia transitent par un réseau de télécommunication entre un émetteur et un destinataire. Un tel réseau de télécommunication comporte toutes les infrastructures permettant l'acheminement de ces messages multimédia.

La figure 1 montre une étape 101 de production automatique et d'émission d'un message multimédia. L'étape 101 est mise en oeuvre par le module 201 de génération de message multimédia. Une fonction du module 201 de génération est de produire un message multimédia comportant un certain nombre de champs. La figure 3a illustre des champs que comporte un message multimédia. Un message 300 multimédia comporte un champ 301 d'en-tête. Le champ 301 comporte entre autres un champ 302 identifiant l'expéditeur du message 300, et un champ 303 identifiant le destinataire du message 300. Le message 300 comporte aussi un champ 304 objet ou sujet du message et un champ 305 qui est le corps du message.

L'étape 101 comporte plusieurs sous-étapes pour renseigner les différents champs du message 300. Dans une sous-étape 102 le module 201 de génération renseigne le champ 305 de corps. Le champ 305 contient les données du message multimédia formatées selon un langage de type SMIL. C'est le module de génération, paramètré par un utilisateur, qui détermine le type de données qui seront présentes dans le corps 305 du message 300. Ces données sont du texte, du son, et/ou des images animées/fixes. Ces données sont présentes en quantité variable selon le test que l'on souhaite effectuer. On peut ainsi tester le comportement du réseau de télécommunication pour des messages multimédia comportant uniquement un médium, plusieurs média, peu de données, et/ou beaucoup de données. Les corps sont soit composés à la main par un utilisateur, soit lus dans une table/bibliothèque comportant un certain nombre de contenus possibles pour le corps, soit produits par le module 201 en fonction d'un paramètre de taille par exemple. Dans le dernier cas il s'agit alors d'un simple bourrage du corps 305. Dans le cas de l'utilisation d'une bibliothèque, celle-ci est enregistrée dans une mémoire à laquelle a accès le module 201 de génération.

De la sous-étape 102, on passe à une sous-étape 103 dans laquelle le module 201 de génération renseigne les champs émetteur (IDE) et destinataire (IDD) du message 300 multimédia. Ces champs comportent des identifiants d'une personne, ou plus exactement d'un contrat existant entre une personne physique et un opérateur du réseau de télécommunication. Ces identifiants sont des identifiants électroniques comme une adresse de boîte à lettre électronique (e-mail), un numéro de téléphone, une adresse Internet, ou une autre forme d'identification en cours sur le réseau de télécommunications. Dans notre description on considère que l'identifiant IDD est un numéro de téléphone, alors que l'identifiant IDE est soit une adresse e-mail, soit respectivement un numéro de téléphone selon que l'on veut simuler une émission d'un message multimédia par un ordinateur soit respectivement par un combiné téléphonique. Les identifiants IDD et IDE sont sélectionnés par le module 201 de génération parmi une liste d'identifiants prédéfinie. Cette liste permet d'effectuer un filtrage parmi les messages multimédia transitant sur le réseau de télécommunication. Ces identifiants IDD et IDE peuvent aussi être spécifiés par un utilisateur mettant en oeuvre le module 201 de génération.

De la sous-étape 103 on passe à une sous-étape 104 de production du champ 304 objet du message 300. Le champ objet comporte des informations sur le message multimédia produit par le module 201 de génération. Ces informations ne sont pas un résumé en langage naturel de la nature du message 300. Un langage naturel est une langue comme le français ou l'anglais. Ces informations sont des informations formelles utilisables directement et sans ambiguïté par un processus de traitement automatisé. Le fait que ces informations puissent être représentées par des caractères déchiffrables par un individu ne change rien ici. Ces informations sont un identifiant de messages multimédia permettant d'identifier le message 300 parmi tous ceux produits par le module 201 de génération. Cet identifiant est enregistré dans un champ 311 du champ 304. Cet identifiant est obtenu, par exemple, par l'incrémentation d'un compteur par le module 201 de génération. Chaque message produit a alors un identifiant différent. Ce compteur peut être remis à zéro sur intervention d'un utilisateur ou à l'échéance d'une durée prédéterminée. Un tel identifiant peut aussi être produit par une fonction prenant une date en paramètre et garantissant l'unicité de l'identifiant. Dans le champ 304, les champs 311 à 314 peuvent être distingués de plusieurs manières. Une première manière est d'attribuer à chaque champ une taille fixe. Une deuxième manière est de structurer ces champs 311 à 314 selon une syntaxe XML (eXtended Markup Language, pour langage de balisage étendu), chaque champ étant alors délimité par une balise ouvrante et une balise fermante. Ces deux possibilités, ainsi que d'autres, sont ouvertes pour l'ensemble des champs décrits dans la description.

Le champ 304 objet comporte aussi un champ de date indiquant la date à laquelle le message 300 a été produit et émis. Ce champ a une résolution qui est au moins à la seconde et permet de définir une date en année, mois, jour, heure et seconde. Dans une variante on rajoute la fraction de seconde à laquelle la production - émission a eu lieu. Pour des tests s'étendant sur une courte période, on peut se dispenser des informations d'année, ou de mois. Cependant ces informations d'années et de mois sont utiles pour les tests à cheval sur 2 années, ou sur deux mois.

Le champ 304 objet comporte aussi un champ 313 de code instruction pour un module 202 de récupération de messages multimédia. Ce champ 313 est interprété par le module 202 de récupération. Un tel code instruction est par exemple une durée de latence que doit laisser s'écouler le module de récupération avant de récupérer un message multimédia. Un autre code instruction possible est de ne pas récupérer le message multimédia.

Le champ 304 objet comporte aussi un champ 314 de somme de contrôle. Le champ 314 comporte une somme de contrôle du champ 305. Cette somme de contrôle est calculée par le module 201 de génération en fonction du contenu du champ 305 déterminé à la sous-étape 102.

Dans une variante le champ 304 ne comporte que le champ 311, ce qui permet d'obtenir une information sur le fait que le message ait été acheminé jusqu'à son destinataire ou pas. Chacun des autres champs 312 à 314 apporte des informations supplémentaires sur l'acheminement des messages. Ces informations sont principalement la durée et l'intégrité de la transmission.

De la sous-étape 104 on passe à une sous-étape 105 d'émission du message 300. Le module 201 de génération émet le message 300 selon un protocole permettant de simuler le fonctionnement d'un appareil utilisé par le public pour l'émission d'un message multimédia. Dans ce cas le public est soit un particulier, soit une entreprise, soit un fournisseur de contenus souhaitant envoyer des messages multimédia. Parmi ces protocoles on cite les protocoles HTTP, SMTP, SOAP, WAP, mais ils en existent d'autres. Le protocole utilisé pour l'émission du message 300 est paramètré par un utilisateur mettant en oeuvre le module 201. Le module 201 comporte donc des moyens pour communiquer selon ces différents protocoles. Ces moyens sont connus puisque de nombreux appareils communiquent déjà via ces protocoles.

Parmi les autres paramètres du module 201, sont le nombre de messages multimédia à émettre par seconde, et la durée pendant laquelle le module émet des messages. Ces deux paramètres permettent d'effectuer des tests de charge et d'endurance. Une fois paramètré, le module 201 de génération émet donc un ou plusieurs messages multimédia, via un ou plusieurs protocoles, vers un ou plusieurs destinataires, à une fréquence donnée et pendant une durée donnée. Ces messages sont émis à travers le réseau de télécommunication auquel est connecté le module 201 et dont on veut évaluer les performances de transmission pour l'acheminement de messages multimédia.

Pour chaque message qu'il émet, le module 201 connaît ses paramètres qui sont au moins : identifiant 311, date 312, code 313, somme de contrôle 314, contenu des champs IDE, IDD, 305, et le protocole utilisé. Ces informations sont transmises à un module 203 d'analyse des résultats. Ces données seront corrélées avec celles recueillies par le module 202 de récupération.

Une alternative pour paramètrer le comportement du module 201 est d'utiliser un scénario. Le module 201 comporte alors des moyens, sous formes de codes instruction, pour interpréter des scénari permettant la mise en oeuvre des moyens de production/émission de messages multimédia du module 201. Un tel scénario se présente, par exemple, sous la forme d'un fichier au format XML. Il peut avoir la forme suivante :

```
             Exemple de scénario : fichier scénario.xml
       00   <?xml version="1.0" encoding="utf-8">
       01   <!DOCTYPE scenario SYSTEM "scenario.dtd">
       02   <scénario titre="titre du scénarion"
       descritpion="description du scénario">
       03        <séquence titre="séquence multiprotocole"
                 description="séquence durant laquelle des
                 messages multimédia sont envoyés selon
                 plusieurs protocoles" durée="198">
       04             <profilDeTrafic
       05                  titre="pdt1"
       06                  fréquence="f1"
       07                  nomMMS="mms1"
       08                  protocole="smtp"
       09                  delaiDeRecuperation="2"
       10              />
       11             <profilDeTrafic
       12                   titre="pdt2"
       13                  fréquence="f2"
       14                  nomMMS="mms2"
       15                  protocole="wap"
       16                  delaiDeRecuperation="0"
       17              />
       18         </séquence>
       19         <séquence titre="séquence monoprotocole"
                  description="séquence mettant en oeuvre un
                  seul protocole" durée="256">
       20             <profilDeTrafic
       21                  titre="pdt3"
       22                  fréquence="f3"
       23                  nomMMS="mms3"
       24                  protocole="wap"
       25                  delaiDeRecuperation="1"
       26             />
       27         </séquence>
       28   </scénario>
```

Le fichier scénario.xml permet ainsi de décrire un scénario définissant le comportement du module 201. Pour la suite l'usage du mot ligne se rapporte à une ligne du fichier scénario.xml. La ligne 01 correspond à un entête standard dépendant de la version du langage XML utilisé.

La ligne 02 permet de spécifier un fichier de grammaire permettant à un programme d'interprétation de vérifier que la syntaxe du fichier scénario.xml est bien conforme à ce que ce programme d'interprétation attend.

On rappelle ici qu'un fichier XML est assimilable à un arbre, c'est à dire à un ensemble d'objets hiérarchisés. Ainsi le fichier scénario.xml décrit un scénario entre ses balises ouvrante et fermante, à savoir entre les lignes 03 et 28. Le fichier scénario.xml comporte un objet scénario qui comporte lui même des objets séquence. Chaque objet séquence comporte un ou plusieurs objets profilDeTrafic. D'autre part chaque objet comporte une ou plusieurs propriétés.

L'objet scénario comporte, dans notre exemple, des propriétés titre et description. Ici, un titre permet d'identifier un objet, une description permet de décrire plus ou moins brièvement l'objet. Dans notre exemple l'objet scénario comporte deux objets séquence. Dans la pratique l'objet scénario comporte un nombre quelconque d'objets séquence.

Un objet séquence comporte un titre, une description et une durée. La durée est un nombre exprimé, par exemple, en secondes. Dans une variante une autre unité peut être employée comme la minute, le dixième de seconde, ou toute fraction de seconde. La durée exprime le temps pendant lequel le module 201 doit exécuter les instructions des objets profilDeTrafic que l'objet séquence en question comporte. Si durée vaut 198, alors le module 201 exécutera les instructions des objets profilDetrafic que comporte l'objet séquence dont la durée vaut 198 pendant 198 secondes.

L'exemple scénarion.xml montre un objet séquence comportant 2 objets profilDeTrafic et un objet séquence comportant un objet profilDeTrafic. Dans la pratique un objet séquence comporte un nombre quelconque d'objet profilDeTrafic.

Un objet profilDeTrafic comporte plusieurs propriétés parmi lesquelles un titre, une fréquence, un nom de message multimédia, un protocole et un délai de récupération. L'interprétation d'un objet profilDeTrafic consite donc en la production d'un message multimédia dont la structure est identifiée par le nom du message multimédia. A ce nom correspond une taille, une structure, et un ou des types de contenus. La fréquence correspond à la fréquence à laquelle le message multimédia correspondant à l'objet profilDeTrafic doit être émis. Le protocole correspond au protocole selon lequel le message multimédia correspondant à l'objet profilDeTrafic doit être émis. Le délai de récupération correspond à une instruction pour le module 202. Le délai de récupération est donc utilisé pour la production du contenu du champ 313.

L'exemple scénario.xml correspond à une succession de deux séquences d'émission de message. Une première séquence durant 198 seconde durant laquelle le module 201 génère deux types de trafic. Le premier type de trafic est décrit par l'objet profilDeTrafic identifié par le titre "pdt1", le deuxième type de trafic est décrit par l'objet profilDeTrafic identifié par le titre "pdt2". Le premier type de trafic correspond alors à l'émission, à la fréquence f1, de messages identifiés par le nom de message "mms1" selon le protocole "smtp". Le deuxième type de trafic correspond alors à l'émission, à la fréquence f2, de messages identifiés par le nom de message "mms2" selon le protocole "wap". Une fois que la durée de l'objet séquence pré-décrit est écoulée on interrompt les trafics lui correspondant puis on exécute les instructions correspondant à la séquence suivante dans le fichier scénario.xml. Un trafic correspond ici a un émission d'un message donnée à une fréquence donnée. La séquence suivante, dont le titre est "séquence monoprotocole" comporte un seul objet profilDeTrafic qui est interprété comme précédemment pour la première séquence.

A partir d'ici, le mot ligne ne fait plus explicitement référence à une ligne du fichier scénario.xml, sauf précision explicite.

Le paramétrage du module 201 peut donc se faire soit à la volée via une interface utilisateur, soit via un fichier de configuration équivalent au fichier scénario.xml. Une interface utilisateur permet de saisir les données avant le lancement du programme, ou au fur et à mesure que le programme en a besoin. Un fichier de configuration est équivalent au fichier scénario.xml dès lors qu'il comporte au moins une instruction dont l'interprétation provoque l'émission d'un ou plusieurs messages multimédia par le module 201.

De la sous-étape 105 on passe à une étape 106 de traitement du message par un serveur relais 204. Un serveur relais est aussi appelé couramment MMS-C, pour central de messages multimédia. Le module 201 et le serveur relais 204 sont connectés via le réseau de télécommunication. Si cette connexion est réalisée via le protocole WAP, alors il existe, entre le module 201 et le serveur relais 204, une passerelle 205 WAP interface entre le module 201 et le serveur relais 204. Il s'agit du cas où le module 201 simule le comportement d'un ou plusieurs téléphones mobiles émettant des messages multimédia. Dans ce cas la communication entre le module 201 et la passerelle 205 se fait via une partie du réseau de télécommunication de type réseau cellulaire. Ce résultat est obtenu, par exemple, en utilisant des modems GSM, GPRS, ou UMTS pour permettre au module 201 d'émettre les messages multimédia produits.

Dans une optique de simulation d'émission de messages multimédia depuis un téléphone mobile, les modules 201 et 202 peuvent simuler partiellement ou entièrement le comportement attendu par la passerelle 205. On distingue deux cas :
- le module 201, ou 202, est connecté au réseau de télécommunications en mode données, que ce soit selon la norme CSD, GPS, UMTS ou autre. La gestion de l'adressage, de l'authentification et autre problématique réseau, est alors réalisé par l'infrastructure du réseau de télécommunications, notamment par les équipements connues sous les désignations SGSN/GGSN dans les cas d'utilisation des normes GPRS/UMTS. Le module 201 se contente alors d'envoyer des messages multimédia au-dessus du protocole WAP sans aucune contrainte. Le module 202 se contente alors de recevoir des messages multimédia au-dessus du protocole WAP sans aucune contrainte. Il s'agit là d'une simulation entière.
- le module 201, ou 202, est connecté directement au serveur/relais 204 ou à la passerelle 205 directement via la protocole TCP/IP. C'est le cas notamment pour les tests de performance où l'on souhaite mesurer la qualité de service du serveur relais 204, ou du serveur relais 204 associé à la passerelle 205. Dans ce cas le module 201 gère des fonctions du réseau de télécommunications pour que cette connexion directe soit transparente pour le serveur relais 204 et ou la passerelle 205.

Ainsi les modules 201 et 202 permettent soit de simuler uniquement l'émission réception de messages multimédia au dessus du protocole WAP, soit de simuler l'ensemble des messages que reçoivent le serveur relais 204 et la passerelle 205.

Pour pouvoir simuler l'utilisation du réseau de télécommunication par plusieurs clients de type téléphone mobile, assistant personnel, ou autre, le module 201 a, dans une variante, une architecture logicielle de type multiprocessus. Un synonyme de multiprocessus est multitâches. Le module 201 est donc capable d'exécuter simultanément plusieurs processus, chaque processus ayant comme fonction d'émettre un message multimédia et donc de réaliser au moins l'étape 106. Dans la pratique un processus a connaissance des éléments produits aux étapes 102 à 104, et dans une variante le processus réalise ces étapes. Chaque processus est alors assimilable à un client du réseau de télécommunications. A ce titre chaque processus/client se voit allouer des ressources pour pourvoir communiquer sur le réseau de télécommunications. Une de ces ressources, en particulier dans le cas d'une communication selon le protocole WAP, est une adresse Internet. Dans la mesure ou le module 201 est multiprocessus il se voit attribuer plusieurs adresses Internet, une par processus actif en fait. Dans la pratique, lorsque le module 201 interprète une séquence d'un scénario, il créé autant de processus que l'objet séquence comporte d'objet profilDeTrafic. Dans une variante, chaque message multimédia est émis par un processus différent. Cette dernière variante permet de simuler la connexion d'un grand nombre de clients au réseau de télécommunication. Cela permet d'effectuer une simulation différente de celle consistant à simuler un client émettant un grand nombre de messages multimédia. Par grand nombre on entend ici que l'on est capable d'émettre plusieurs dizaines de messages multimédia par seconde, voir une centaine. Dans la pratique si on a besoin d'une plus grande capacité, on peut soit augmenter la puissance du microprocesseur que comporte le module 201, soit utiliser plusieurs modules tel que le module 201. L'utilisation de plusieurs modules d'un type s'étend également aux autres modules que sont les modules d'interception, de récupération, et d'analyse.

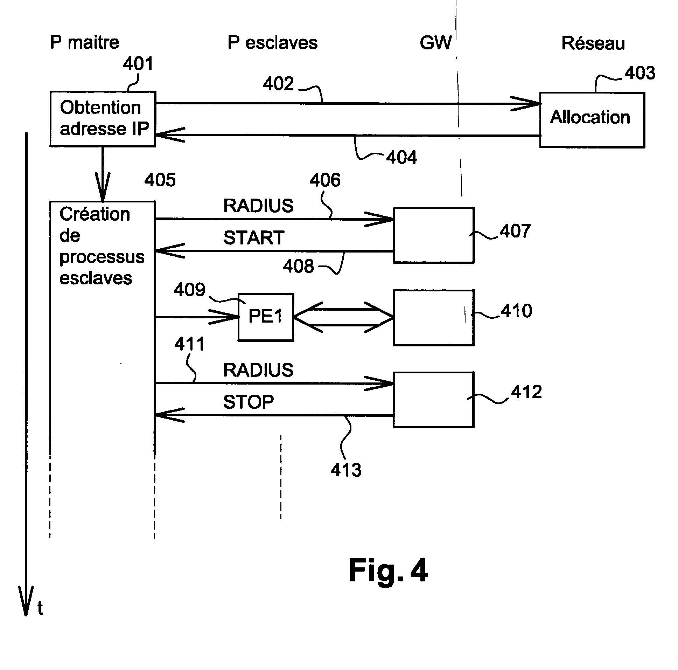

La figure 4 illustre un mode de fonctionnement multiprocessus pour le module 201 dans le cadre de la simulation d'une communication impliquant plusieurs clients sur le réseau de télécommunications. La figure 4 montre une étape 401 préliminaire dans laquelle un processus maître du module 201 obtient des adresses Internet en émettant une requête 402 d'allocation de ressources à l'infrastructure du réseau de télécommunications. En réponse à la requête 402, le réseaux de télécommunications, via une étape 403 émet une réponse 404 à la requête 402. La réponse 404 comporte une liste d'adresses Internet utilisables par le processus maître. De l'étape 401 on passe à une étape 405 de création des processus esclaves. Les processus esclaves, comme le processus maître sont des programmes exécutés par le module 201. Chaque processus à une durée de vie. Le processus maître à une durée de vie infinie, ou au moins égale à l'exécution de commandes paramètrées par l'utilisateur du module 201. Les processus esclaves ont une durée de vie égale à la durée de la tâche qui leur a été assignée par le processus maître.

Le processus maître émet, vers la passerelle 205 un message 406 connu sous le nom de RADIUS Accounting START. Le message 406 a comme paramètre une adresse Internet. Il s'agit d'une des adresses Internet obtenues à l'étape 401. Le message 406 a aussi comme paramètre un numéro de téléphone identifiant un client du réseau de télécommunications. Dans une étape 407, la passerelle 205 traite le message 406 et émet une réponse 408 au message 406. Le processus maître est alors en mesure de créer un processus esclave en lui fournissant, d'une part toute les informations utiles pour la production d'un message multimédia, d'autre part, toutes les informations utiles à l'établissement d'une communication avec la passerelle 205. Ces informations pour la communication sont en effet contenues dans la réponse au message 406. Les informations pour la production du message multimédia sont obtenues via le paramétrage du module 201. Dans une étape 409, le processus esclave effectue donc les actions décrites pour l'étape 101. L'étape 409 s'effectue en communiquant avec la passerelle 205, qui effectue les actions adéquates dans l'étape 410.

Le processus esclave prend fin lorsque le message multimédia a été envoyé. Le processus maître émet alors un message RADIUS Accounting STOP 411, pour signifier à la passerelle 205 que les ressources allouées pour la communication avec le processus esclave peuvent être libérées. La passerelle 205 répond, via une étape 412 par un message 413 signifiant que le message 411 a bien été traité.

L'enchaînement d'actions 406 à 413 est répété autant de fois qu'il y a des processus esclaves à créer pour l'exécution de la tâche paramètrée pour le module 201. Chaque processus esclave est indépendant des autres. Plusieurs processus esclaves peuvent coexister dans le temps.

Le module 202 peut lui aussi fonctionner selon le même schéma. Dans ce cas il ne s'agit cependant pas d'émettre des messages multimédia à l'étape 409, mais d'en récupérer. L'étape 409 est alors équivalente à une étape 112 dont la description est à venir.

Cette architecture multiprocessus n'est pas unique. Ainsi, dans une autre variante la gestion des messages radius est laissée à la charge des processus esclave eux même. Dans une autre variante, l'obtention des ressources réseaux, c'est à dire l'étape 401, est elle aussi laissée à la charge des processus esclaves. Dans ce dernier cas un processus esclave est alors totalement assimilable à un client du réseaux de télécommunication. Dans tous les cas, la passerelle WAP et ou le serveur relais MMS-C ont l'impression d'avoir à faire à plusieurs clients réseaux.

Une autre variante pour le module 201, et ou 202, est une architecture logicielle séquentielle itérative. C'est à dire que les sous-étapes de l'étape 101, et ou 112, sont réalisées les unes à la suite des autres tant qu'une condition d'arrêt n'a pas été atteinte. Une telle condition d'arrêt est, par exemple, une durée d'émission, un nombre de message ou une condition équivalente. Dans le mode de fonctionnement séquentielle, le module 201, après avoir exécuté la sous-étape 105 recommence à la première sous-étape de l'étape 101 tant que la condition d'arrêt n'est pas atteinte. Il est évidemment possible de mélanger les deux type d'architectures logicielles.

Pour l'étape 106, on note que le serveur relais 204 est un équipement standard du réseau de télécommunication. A ce titre il se comporte de manière standard quand il reçoit un message multimédia. Ce comportement consiste à enregistrer le message multimédia reçu dans une mémoire de stockage après lui avoir attribué un identifiant URLM. Puis le serveur relais 204 compose et émet un message de notification vers le destinataire du message multimédia. Ce destinataire est identifié par le champ 303 du message multimédia.

Un message 320 de notification produit par le serveur relais 204 comporte un en-tête 321 qui comporte au moins des champs 322, respectivement 323 équivalents aux champs 302, respectivement 303. Le message 320 comporte aussi un champ 324 objet identique au champ 304. Le message 320 de notification comporte encore un champ 325 identifiant permettant de transmettre l'identifiant URLM. Le message 320 de notification comporte d'autres informations, en particulier une information permettant d'identifier ce message comme un message de notification de la réception d'un message multimédia. Une fois le message 320 produit, il est émis, via le réseau de télécommunication, vers le destinataire du message multimédia qui a provoqué la production du message de notification. La première notification est codée en binaire ou en format texte selon le type de terminal destinataire.

Le champ 325 est produit par le serveur relais 204 ou la passerelle 205 selon le type de terminal destinataire. Dans la pratique ce champ comporte une URL (Universal Resource Locator, pour Localisateur universel de ressource) permettant d'accéder au message multimédia correspondant sur le serveur relais 204. Dans la pratique l'invention est compatible avec d'autres types de données pour le champ 325, ces types de données permettant l'identification d'un message multimédia.

Dans l'exemple de la description le destinataire est identifié par un numéro de téléphone, le message 320 de notification est donc envoyé comme un ou plusieurs messages court aussi appelés message SMS (Short Message Service, pour service de message court). Cependant le message 320 peut aussi être envoyé via des protocoles comme SMPP (Short Message Peer to Peer, pour message court interpersonnel), ou UCP (Universal Computer Protocol, pour protocole universel d'ordinateur).

De l'étape 106 on passe à une étape 107 d'interception du message 320 de notification par un module 206 d'interception. L'étape 107 est réalisé pour chaque message de notification émis à l'étape 106. Dans une variante préféré le module 206 est connecté dans le réseau de télécommunication entre le serveur relais 204 et un équipement 207 centre de message court ou SMS-C. L'équipement SMS-C est chargé de l'acheminement correct des messages SMS vers leur destinataire final.

Le module 206 intercepte tous les messages de notification émis par le serveur relais 204. Cela permet au module 206, dans une sous-étape 108, de prendre connaissance du contenu du champ 323 destinataire de ce message de notification. La connaissance de ce champ permet de déterminer s'il s'agit d'un message de notification conséquence de l'émission d'un message multimédia par le module 201. En effet le module 206 est en connaissance de la liste d'adresses utilisée par le module 201 dans la sous-étape 103. Il est donc aisé de déterminer si le destinataire est en fait un destinataire fictif dû au module 201. Pour l'étape 107, il s'agit en fait d'un filtrage des messages émis par le serveur relais 204.

Dans une variante le filtrage s'effectue sur le champ 322. Dans une autre variante le filtrage s'effectue sur le champ 324. De par sa nature le champ 324 a en effet une structure particulière qu'il est aisé de détecter. La détection de cette structure permet de trier les messages de notification et de déterminer ceux dûs à des messages multimédia émis par le module 201. En d'autres termes la détection de cette structure permet de déterminer que le destinataire du message de notification est en fait le module 202.

De la sous-étape 108 on passe à une sous-étape 109 d'aiguillage. Si la sous-étape 108 a permis de classer le message de notification intercepté parmi ceux du à l'émission d'un message multimédia par le module 201 alors on passe de la sous-étape 109 à la sous-étape 110 de production émission d'un deuxième message de notification. Sinon on passe de la sous-étape 109 à une étape 111 dans laquelle le message 320 de notification poursuit son acheminement normal. Dans ce dernier cas le module 206 est transparent dans le réseau de télécommunication.

Dans la sous-étape 110 le module 202 produit un deuxième message 330 de notification. Le message 330 de notification est adressé au module 202 de récupération de messages multimédia. Le contenu du message 330 permet au module 202 de récupération de récupérer le message multimédia correspondant au message 320 de notification. Le message 330 comporte donc au moins un champ 335 dont le contenu est identique au contenu du champ 325. Le message 330 de notification comporte aussi un en-tête propre au protocole utilisé pour la communication entre les modules 206 et 202. Si le champ 324 comporte un code instruction pour le module 202, alors le message 330 comporte un champ pour la transmission de ce même code. Dans une variante, tout ou partie des champs 322 à 324 sont transmis via le message 330. Le module 202 peut également insérer la date de réception de la notification dans le champ 326. Le message 330, une fois constitué, est envoyé vers le module 202 de récupération.

Dans une variante le module 206 est situé dans le réseau de télécommunication au delà de l'équipement SMS-C. Cela signifie que les messages de notification émis par le serveur relais 204 sont vus en premier par l'équipement SMS-C. Dans ce cas, le module 206 se comporte comme un appareil joignable par les identifiants 323 des messages de notification.

L'étape 111 est une étape d'émission par le module 206 du message 320 de notification, le message 320 étant inchangé par le module 206.

Le module 206 comporte donc à la fois des moyens pour communiquer avec le serveur relais 204, l'équipement SMS-C, mais aussi avec le module 202. Ces moyens sont des circuits interfaces et des programmes de type pilote pour ces circuits interface. Du point de vue de l'équipement SMS-C, le module 206 apparaît comme le serveur relais 204.

De la sous-étape 110 on passe à une étape 112 de traitement de la deuxième notification 330 par le module 202 de récupération. L'étape 112 est réalisé pour chaque message de notification adressé au module 202 par le module 206. La structure logicielle du module 202, pour l'exécution de l'étape 112, est soit multiprocessus, soit séquentielle itérative. Ces architectures ont déjà été décrites pour le module 201.

Dans l'étape 112, le module 202 extrait du deuxième message 330 de notification les différents champs que le message 330 contient. L'étape 112 comporte une première étape 113 facultative d'exécution d'un code instruction. Il s'agit du code instruction du champ 313. Ce code instruction peut indiquer au module 202 qu'il doit procéder à la récupération du message multimédia correspondant immédiatement, dans un délai donné par le code instruction, ou jamais. Le code instruction peut aussi spécifier de quelle façon il faut récupérer le message multimédia correspondant, c'est-à-dire en laissant une copie sur le serveur relais 204 ou en ne laissant pas de copie. Il ne s'agit là que d'exemples de codes instruction possibles. Une fois le code instruction interprété, on passe à une sous-étape 114 de récupération du message multimédia.

Dans la sous-étape 114 et dans l'exemple de la description, le module 202 se comporte exactement comme le ferait un téléphone mobile qui aurait reçu le message 320 de notification. C'est-à-dire que le module 202 compose un message 340 de récupération comportant un champ 341 en-tête, un champ 342 code instruction de récupération, et un champ 343 d'identification du message multimédia à récupérer. Dans la pratique le champ 342 correspond au code 313 instruction. Si le code 313 n'a pas été transmis, alors le code 342 est un code simple de récupération d'un message multimédia.

Le champ 343 correspond dans une variante préférée au champ 335. Dans une variante, le champ 343 comporte le contenu des champs 322, 323 et 312, ce qui permet de désigner un message multimédia sur le serveur relais 204. En effet la connaissance de l'émetteur, du destinataire et de la date d'émission permet de retrouver un message sur le serveur relais 204.

Une fois le message 340 produit, il est émis à destination du serveur relais 204. De manière à être le plus proche possible des conditions d'exploitation d'un réseau de télécommunication, le message 340 est émis via le protocole WAP. Le module 202 comporte donc des moyens pour communiquer selon ce protocole. Le message 340 transite donc via, par exemple, la passerelle 205 avant d'atteindre le serveur relais 204.

Du point de vue du serveur relais 204, le message 340 a été émis par un téléphone mobile, ou un appareil équivalent. Le message 340 est donc traité comme n'importe quel message de ce type. En pratique le serveur relais 204 recherche dans sa mémoire de stockage le message multimédia correspondant au contenu du champ 343. Une fois ce message trouvé, il l'envoie à destination de l'appareil ayant émis le message/requête 340 de récupération. A cette fin, le champ 341 comporte une adresse pour la réponse au message 340. Dans la pratique, la réponse au message 340 comporte au moins les champs 304 et 305. Cette réponse peut contenir le message 300 en intégralité.

De la sous-étape 114, on passe à une sous-étape 115 de traitement de la réponse au message 340. Dans la pratique, ce traitement consiste en la composition d'un message 350 de résultat. Un message de résultat comporte un champ 351 identifiant le message multimédia. Ce champ correspond au champ 311 produit par le module 201 de génération. Le message 350 comporte aussi un champ 352 de date à laquelle à été reçu la notification de réception du message multimédia identifié par le champ 351. Dans une variante, le champ 351 comporte la différence entre la date à laquelle a été reçu la notification correspondant au message multimédia et la date à laquelle il a été émis. Cette date d'émission est disponible via le champ 312. La date de réception de la notification est accessible soit parce qu'elle est présente dans le premier message 320 de notification, soit parce qu'on considère que la date de réception du deuxième message 330 de notification par le module 202 est assimilable à la date de réception de la première notification par le module 206. Une autre possibilité est d'utiliser le champ 326, date insérée par le module 206 sur réception de la première notification.

Afin que l'on puisse comparer les date d'émission et de récupération, au moins des horloges des modules 201, 202 et 206 sont synchronisées afin qu'à un même instant corresponde une même date sur les trois modules. Cette synchronisation est réalisée, par exemple par le protocole NTP (Network Time Protocol, pour protocole de temps réseau). Cette synchronisation peut aussi être obtenue via une horloge unique qu'interroge les trois modules pour obtenir une date. Ce processus de synchronisation correspond à une étape 118 dont l'exécution est continue dans le temps et simultanée avec celle des autres étapes.

Dans une variante, le message 350 comporte aussi un champ de durée permettant d'indiquer le temps écoulé entre l'émission du message 340 et la réception complète de la réponse au message 340.

Enfin le message 350 de résultat comporte un champ 353 de somme de contrôle. Le champ 353 comporte la somme de contrôle calculée par le module 202 à partir du contenu du champ 305 du message multimédia récupéré à la sous-étape 114. L'algorithme utilisé par le module 202 pour calculer la somme de contrôle est le même que celui utilisé par le module 201 pour la production du contenu du champ 314. Dans une variante, le champ 353 comporte le résultat de la comparaison des sommes de contrôle produites par les modules 201 et 202. Le résultat s'exprime alors, par exemple, par 0 si il y a des différences, par 1 si les sommes de contrôle sont identiques. Dans une autre variante le contenu du champ 353 est identique au contenu du champ 305 récupéré à la sous-étape 114. Dans ce cas il appartient au module destinataire du message 350 de procéder au calcul de la somme de contrôle sur le contenu du champ 353.

Une fois le message 350 produit, on passe à une étape 116 d'émission des résultats. Dans l'étape 116 le module 202 émet le message 350 à destination du module 203 d'analyse des résultats. On passe alors de la sous-étape 116 à une étape 117 de synthèse des émissions récupérations.

L'étape 117 est mise en oeuvre par le module 203 d'analyse des résultats. Dans une variante, le module 202 est confondu avec le module 203.

Dans l'étape 117 il est possible, grâce aux champs 311 et 351 de corréler les informations émises par le module 201 et les informations de résultat produites et émises par le module 202. Ces informations sont de même nature et sont donc comparables, que ce soit des dates, ou des sommes de contrôle. Ainsi, grâce à l'invention, on peut obtenir des statistiques sur :
- un délai d'acheminement d'un message multimédia, c'est-à-dire le temps écoulé entre l'émission du message multimédia et la réception d'une notification indiquant la réception du message multimédia par le serveur relais 204;
- un délai nécessaire pour la récupération d'un message multimédia sur le serveur relais 204;
- le nombre de notifications non envoyées par le serveur relais 204 bien que le module 201 ait émis des messages multimédia, c'est-à-dire en fait le nombre de messages multimédia perdus;
- le nombre de notifications émises pour un même message multimédia;
- le nombre de messages multimédia reçus corrompus par rapport au messages qui avait été envoyés;
- le nombre d'échecs lors de l'émission de messages multimédia, c'est-à-dire le nombre de messages multimédia refusés par le serveur relais 204;
- le nombre d'échecs lors de la récupération des messages multimédia;
- ainsi que des statistiques réseau générales lors des communications entre les modules 201 et 202 et le serveur relais 204. De telles statistiques portent notamment sur la qualité des communications en terme de nombre de paquets perdus, erronés, et réémis au cours des communications.

De plus avec l'invention il est possible d'établir des statistiques en fonction du protocole utilisé par le module 201 pour émettre les messages multimédia, en fonction de la taille des messages multimédia, et/ou de la nature du contenu des messages multimédia.

Un autre intérêt de l'invention est que l'on n'effectue aucune modification sur les infrastructures du réseau telles que le serveur relais 204 ou le SMS-C 207.

Dans une variante de l'invention, le module 201 est un intermédiaire entre un serveur 208 d'un fournisseur de service et le serveur relais 204. Dans une telle variante des utilisateurs se connectent au serveur 208 pour produire/émettre des messages multimédia. Ces messages sont interceptés par le module 201 qui modifie le champ objet de ces messages multimédia comme décrit pour l'étape 104. Le champ objet d'un message multimédia ainsi modifié comporte alors l'ancien champ objet et les champs 311 à 314. Les messages de notification de réception de messages multimédia modifiés sont interceptés par le module 206 qui cette fois émet un message de notification vers le module 202 et vers le destinataire du message multimédia. L'émission vers le module 202 n'a lieu que si le message de notification est reconnu comme correspondant à un message multimédia modifié. Cette reconnaissance est faite par la structure du champ objet. Le champ objet du message de notification pour le destinataire est expurgé des données supplémentaires produites par le module 201. Le module 202, lorsqu'il récupère le message multimédia en laisse une copie sur le serveur relais 204 pour que ce message puisse être récupéré par son destinataire. Dans cette variante le module 203 d'analyse dispose des même informations que dans la variante principale. Il est donc possible avec l'invention d'effectuer des statistiques précises par fournisseur de service.

La figure 2a illustre les moyens que met en oeuvre chaque module. Des références identiques indiquent des éléments identiques.

La figure 2a montre que le module 201 de génération utilise pour sa mise en oeuvre un microprocesseur 251, une mémoire de programme 252, des circuits de communication 253 et 254. Les éléments 251 à 254 sont connectés par un bus 255. La mémoire 252 comporte des codes instruction pour la mise en oeuvre de différents protocoles de communication, dans des zones 252a-d et 252f, et de la fonction du module 201, dans la zone 252e. Les circuits 253 permettent aux modules 201 de se faire passer pour un téléphone mobile. Les circuits 254 permettent au module 201 de communiquer via un réseau 240 de télécommunication. Le module 201 comporte aussi une mémoire 256 de scénario permettant d'enregistrer des fichiers de paramétrage du module 201. Un tel fichier de paramétrage est équivalant au fichier scénario.xml. La mémoire 256 est connectée au bus 255.

Dans la pratique les circuits 253 et 263 sont connectés à des passerelles WAP 291 et 292 elles mêmes connectée au réseau 240. Le réseau 240 comporte toutes les infrastructures utiles au bon acheminement des communications. Le réseau 240 est de type Internet. Dans la pratique les passerelles 291 et 292 peuvent être une seule et même passerelle 205 comme représentée sur la figure 2. L'existence d'une ou deux passerelles dépend en fait de la distance physique existant entre les modules 201 et 202.

La figure 2a montre que le module 202 de récupération utilise pour sa mise en oeuvre un microprocesseur 261, une mémoire de programme 262, des circuits de communication 263 et 264. Les éléments 261 à 264 sont connectés par un bus 265. La mémoire 262 comporte des codes instruction pour la mise en oeuvre de différents protocoles, dans des zones 262a et 262c, de communication et de la fonction du module 202, dans la zone 262b. Les circuits 263 permettent aux modules 202 de se faire passer pour un téléphone mobile. Les circuits 264 permettent au module 202 de communiquer via le réseau 240.

La figure 2a montre que le module 203 d'analyse utilise pour sa mise en oeuvre un microprocesseur 271, une mémoire de programme 272, des circuits de communication 274. Les éléments 271 à 274 sont connectés par un bus 275. La mémoire 272 comporte des codes instruction pour la mise en oeuvre de différents protocoles de communication, dans une zone 272b, et de la fonction du module 203, dans une zone 272a. Les circuits 274 permettent au module 203 de communiquer via le réseau 240.

La figure 2a montre que le serveur relais 204 utilise pour sa mise en oeuvre un microprocesseur 241, une mémoire de programme 242, des circuits de communication 244. Les éléments 241 à 244 sont connectés par un bus 245. La mémoire 242 comporte des codes instruction pour la réalisation des fonctions d'un MMS-C. Les circuits 244 permettent au serveur relais 204 de communiquer via le réseau 240.

La figure 2a montre que le module 206 d'interception utilise pour sa mise en oeuvre un microprocesseur 281, une mémoire de programme 282, des circuits de communication 284. Les éléments 281 à 284 sont connectés par un bus 285. La mémoire 282 comporte des codes instruction pour la mise en oeuvre de différents protocoles de communication, dans la zone 282a-c et 282e, et de la fonction du module 206, dans la zone 282d. Les circuits 284 permettent au module 206 de communiquer via le réseau 240.

## Revendications

1. - Procédé modulaire de traçage d'un message multimédia à travers un réseau de télécommunications comportant un serveur relais (204) de messages (300) multimédia, un message multimédia comportant un champ destinataire (303) et un champ objet (304),
- le message multimédia est produit (101) de manière automatique par un module (201) de génération de messages multimédia,
- le module de génération insère dans le champ objet du message multimédia des informations (311-314) relatives au message multimédia produit automatiquement,
- le message multimédia produit est émis (105) à travers le réseau de télécommunications,
- le message multimédia produit et émis est reçu (106) par le serveur relais,
- le serveur relais produit et transmet (106) vers un destinataire identifié par le champ destinataire un premier message de notification de réception du message multimédia, le premier message de notification comportant un champ (324) objet dont le contenu comporte au moins les informations du champ objet du message multimédia,
- un module (206) d'interception intercepte (107) le premier message de notification émis par le serveur relais suite à la réception du message multimédia, détermine (108) quel est le destinataire du premier message de notification, et en fonction du destinataire se comporte de manière transparente (111) dans le réseau de télécommunication,
**caractérisé en ce que** :
- alternativement le module (206) d'interception émet (110) un deuxième message de notification à destination d'un module de récupération de messages multimédia, le deuxième message de notification comportant au moins un champ objet dont le contenu permet l'identification du message multimédia correspondant au premier message de notification, le module de récupération étant alors en connaissance d'informations lui permettant d'interroger le serveur relais pour récupérer les messages multimédia produits,
- le module de récupération produit une requête (340) de récupération pour récupérer le message multimédia correspondant au deuxième message de notification, le module de récupération émet la requête de récupération à destination du serveur relais et traite la réponse du serveur relais.

2. - Procédé selon la revendication 1 **caractérisé en ce que** :
- le module de génération transmet à un module (203) d'analyse des premières informations sur les messages multimédia émis par le module de génération,
- le module de récupération transmet au module d'analyse des deuxièmes informations sur des messages multimédia récupérés,
- les premières et deuxièmes informations sont de même nature.

3. - Procédé selon l'une des revendications 1 ou 2 **caractérisé en ce que** le message multimédia est un message MMS.

4. - Procédé selon l'une des revendications 1 à 3 **caractérisé en ce que** le premier message de notification est un message court.

5. - Procédé selon l'une des revendication 1 à 4, **caractérisé en ce que** la requête de récupération est émise en utilisant le protocole WAP.

6. - Procédé selon l'une des revendications 1 à 7, **caractérisé en ce que** le champ objet du message multimédia comporte une information (312) de date.

7. - Procédé selon l'une des revendications 1 à 6, **caractérisé en ce que** les différents modules sont synchronisés.

8. - Procédé selon l'une des revendications 1 à 7, **caractérisé en ce que** le champ objet du message multimédia produit automatiquement comporte une information (314) de somme de contrôle correspondant à un corps du message multimédia produit automatiquement.

9. - Procédé selon l'une des revendications 1 à 8, **caractérisé en ce que** le champ objet du message multimédia produit automatiquement comporte une information (311) d'identification du message multimédia produit automatiquement.

10. - Procédé selon l'une des revendications 1 à 9, **caractérisé en ce que** le champ objet du message multimédia produit automatiquement comporte un code (313) instruction pour définir le comportement du module de récupération.

11. - Procédé selon l'une des revendications 1 à 10, **caractérisé en ce que** le module d'interception traite les données émises par le serveur relais.

12. - Procédé selon l'une des revendications 1 à 11, **caractérisé en ce que** le module d'interception traite les données émises par un SMS-C du réseau de télécommunications.

13. - Procédé selon l'une des revendications 1 à 12 **caractérisé en ce que** le message multimédia comporte un corps (305) dont le contenu est variable en taille et / ou en nature.

14. - Procédé selon l'une des revendications 1 à 13, **caractérisé en ce que** le module de génération émet des messages multimédia à une fréquence donnée.

15. - Procédé selon l'une des revendications 1 à 14, **caractérisé en ce que** le module de génération émet des messages multimédia pendant une période donnée.

16. - Procédé selon l'une des revendications 1 à 15, **caractérisé en ce que** le module de génération émet des messages multimédia via différents protocoles.

17. - Procédé selon l'une des revendications 1 à 16, **caractérisé en ce que** les messages de notification comportent des informations (335, 343) d'identification du message multimédia reçu par le serveur relais auquel ils correspondent.

18. - Procédé selon l'une des revendications 1 à 17, **caractérisé en ce que** le module de génération est un intermédiaire entre un serveur (208) d'un fournisseur de service et le serveur relais, le module de génération modifiant alors les champs objets des messages multimédia interceptés par lui.

19. - Procédé selon l'une des revendications 1 à 18, **caractérisé en ce que** le module de génération est paramètré via un fichier de scénario.

20. - Procédé selon l'une des revendications 1 à 19, **caractérisé en ce que** le module de génération et/ou le module de récupération ont une architecture logicielle multiprocessus.

21. - Dispositif modulaire de traçage d'un message multimédia à travers un réseau de télécommunications comportant un serveur relais (204) de messages multimédia, un message multimédia comportant un champ destinataire et un champ objet **caractérisé en ce qu'**il comporte :
- un module (201) de génération pour produire automatiquement un message,
- le module de génération comporte des moyens pour insérer dans le champ objet du message multimédia des informations relatives au message multimédia produit automatiquement,
- le module de génération comporte des moyens pour émettre le message multimédia produit à travers le réseau de télécommunications,
- le serveur relais comporte des moyens pour produire et transmettre vers un destinataire identifié par le champ destinataire un premier message de notification de réception du message multimédia, le premier message de notification comportant un champ objet dont le contenu comporte au moins les informations du champ objet du message multimédia,
- un module (206) d'interception comportant des moyens pour intercepter le premier message de notification, déterminer quel est le destinataire du premier message de notification, et en fonction du destinataire se comporter de manière transparente dans le réseau de télécommunications,
**caractérisé en ce que:**
- alternativement le module (206) d'interception comporte des moyens pour émettre un deuxième message de notification à destination d'un module (202) de récupération de messages multimédia, le deuxième message de notification comportant au moins un champ objet dont le contenu permet l'identification du message multimédia correspondant au premier message de notification, le module de récupération étant alors en connaissance d'informations lui permettant d'interroger le serveur relais pour récupérer les messages multimédia produits,
- le module de récupération comporte des moyens pour produire une requête de récupération pour récupérer le message multimédia correspondant au deuxième message de notification, le module de récupération comporte aussi des moyens pour émettre la requête de récupération à destination du serveur relais et traite la réponse du serveur relais.

22. - Dispositif selon la revendication 21 **caractérisé en ce que** :
- le module de génération comporte des moyens pour transmettre à un module (203) d'analyse des premières informations sur les messages multimédia émis par le module de génération,
- le module de récupération comporte des moyens pour transmettre au module d'analyse des deuxièmes informations sur des messages multimédia récupérés,
- les premières et deuxièmes informations sont de même nature.

## Claims

1. A modular method for tracing a multimedia message across a telecommunications network comprising a relay server (204) for multimedia messages (300), a multimedia message comprising a recipient field (303) and a subject field (304),
- the multimedia message is produced (101) automatically by a multimedia message generation module (201),
- the generation module inserts in the subject field of the multimedia message information (311-314) related to the multimedia message automatically produced,
- the multimedia message produced is sent (105) across the telecommunications network,
- the multimedia message produced and sent is received (106) by the relay server,
- the relay server produces and transmits (106) a first message of notification of reception of the multimedia message to a recipient identified by the recipient field, the first notification message comprising a subject field (324) whose contents comprise at least the information from the subject field of the first multimedia message,
- an interception module (206) intercepts (107) the notification message sent by the relay server following the reception of the multimedia message, determines (108) which is the recipient of the first notification message, and depending on the recipient behaves transparently (111) in the telecommunications network,
**characterized in that**:
- alternately the interception module (206) sends (110) a second notification message addressed to a multimedia message retrieval module, the second notification message comprising at least one subject field whose contents allow the identification of the multimedia message corresponding to the first notification message, the retrieval module then being in knowledge of information allowing it to interrogate the relay server to retrieve the multimedia messages produced,
- the retrieval module produces a retrieval request (340) for retrieving the multimedia message corresponding to the second notification message, the retrieval module sends the retrieval request to the relay server and processes the response from the relay server.

2. The method according to claim 1 **characterized in that**:
- The generation module transmits the first pieces of information on the multimedia messages sent by the generation module to an analysis module (203),
- The retrieval module transmits the second pieces of information on the multimedia messages retrieved to the analysis module,
- The first and second pieces of information are of the same nature.

3. The method according to one of claims 1 or 2 **characterized in that** the multimedia message is an MMS message.

4. The method according to one of claims 1 to 3 **characterized in that** the first notification message is a short message.

5. The method according to one of claims 1 to 4, **characterized in that** the retrieval request is sent by utilizing the WAP protocol.

6. The method according to one of claims 1 to 7 [sic], **characterized in that** the subject field of the multimedia message comprises a piece of information on the date (312).

7. The method according to one of claims 1 to 6, **characterized in that** the different modules are synchronized.

8. The method according to one of claims 1 to 7, **characterized in that**, the subject field of the multimedia message automatically produced comprises a piece of checksum information (314) corresponding to a body of the multimedia message automatically produced.

9. The method according to one of claims 1 to 8, **characterized in that** the subject field of the multimedia message automatically produced comprises a piece of information (311) for identifying the multimedia message automatically produced.

10. The method according to one of claims 1 to 9, **characterized in that** the subject field of the multimedia message automatically produced comprises an instruction code (313) to define the behavior of the retrieval module.

11. The method according to one of claims 1 to 10, **characterized in that** the interception module processes the data sent by the relay server.

12. The method according to one of claims 1 to 11, **characterized in that** the interception module processes the data sent by an SMS-C of the telecommunications network.

13. The method according to one of claims 1 to 12, **characterized in that** the multimedia message comprises a body (305) whose contents are variable in size and/or in nature.

14. The method according to one of claims 1 to 13, **characterized in that** the generation module sends multimedia messages at a given frequency.

15. The method according to one of claims 1 to 14, **characterized in that** the generation module sends multimedia messages for a given period.

16. The method according to one of claims 1 to 15, **characterized in that** the generation module sends multimedia messages via different protocols.

17. The method according to one of claims 1 to 16, **characterized in that** the notification messages comprise information (335, 343) for identifying the multimedia message received by the relay server to which they correspond.

18. The method according to one of claims 1 to 17, **characterized in that** the generation module is an intermediary between a server (208) of a service provider and the relay server, the generation module then modifying the subject fields of the multimedia messages intercepted by it.

19. The method according to one of claims 1 to 18, **characterized in that** the generation module is parametrized via a scenario file.

20. The method according to one of claims 1 to 19, **characterized in that** the generation module and/or the retrieval module have multiprocess software architecture.

21. A modular device for tracing a multimedia message across a telecommunications network comprising a relay server (204) for multimedia messages, a multimedia message comprising a recipient field and a subject field **characterized in that** the device comprises:
- a generation module (201) to automatically produce a message,
- the generation module comprises means to insert information related to the multimedia message automatically produced in the subject field of the multimedia message,
- the generation module comprises means to send the multimedia message produced across the telecommunications network,
- the relay server comprises means to produce and transmit a first message of notification of reception of the multimedia message to an identified recipient, the first notification message comprising a subject field whose contents comprise at least the information from the subject field of the multimedia message,
- an interception module (206) comprising means to intercept the first notification message, determine which is the recipient of the first notification message, and depending on the recipient, to behave transparently in the telecommunications network,
**characterized in that**:
- alternately the interception module (206) comprises means for sending a second notification message to a multimedia message retrieval module (202), the second notification message comprising at least one subject field whose contents allow the identification of the multimedia message corresponding to the first notification message, the retrieval module then being in knowledge of pieces of information allowing it to interrogate the relay server to retrieve the multimedia messages produced,
- the retrieval module comprises means to produce a retrieval request to retrieve the multimedia message corresponding to the second notification message, the retrieval module also comprises means to send the retrieval request to the relay server and process the response from the relay server.

22. The device according to claim 21, **characterized in that**:
- the generation module comprises means to transmit the first pieces of information on the multimedia messages sent by the generation module to an analysis module (203),
- the retrieval module comprises means to transmit the second pieces of information on the multimedia messages retrieved to the analysis module,
- the first and second pieces of information are of the same nature.

## Patentansprüche

1. Modulares Verfahren zum Mitverfolgen einer Multimediamitteilung durch ein Telekommunikationsnetz, das einen Relaisserver (204) für Multimediamitteilungen (300) umfasst, wobei eine Multimediameldung ein Empfängerfeld (303) und ein Objektfeld (304) umfasst,
- wobei die Multimediamitteilung automatisch (101) von einem Modul (201) zum Erzeugen von Multimediamitteilungen erzeugt wird,
- wobei das Erzeugungsmodul in das Objektfeld der Multimediamittelung Informationen (311-314) in Zusammenhang mit der automatisch erzeugten Multimediamitteilung einfügt,
- wobei die erzeugte Multimediameldung über das Telekommunikationsnetz gesendet (105) wird,
- wobei die gesendete und erzeugte Multimediameldung von dem Relaisserver (106) empfangen wird,
- wobei der Relaisserver eine erste Meldung zur Bekantgabe des Empfangs der Multimediamitteilung erzeugt und zu einem Empfänger überträgt (106), der durch das Empfängerfeld identifiziert ist, wobei die erste Bekantgabemeldung ein Objektfeld (324) aufweist, dessen Inhalt mindestens die Informationen des Objektfelds der Multimediamitteilung umfasst,
- wobei ein Abfangmodul (206) die erste Bekanntgabemeldung, die von dem Relaisserver nach dem Empfang der Multimediameldung gesendet wird, abfängt (107), den Empfänger der ersten Bekanntgabemeldung bestimmt (108) und sich in Abhängigkeit von dem Empfänger in dem Telekommunikationsnetz transparent verhält (111),
**dadurch gekennzeichnet, dass**:
- das Abfangmodul (206) alternativ eine zweite Bekanntgabemeldung zu einem Multimediarückgewinnungsmodul sendet (110), wobei die zweite Bekanntgabemeldung mindestens ein Objektfeld enthält, dessen Inhalt die Identifikation der der ersten Bekantgabemeldung entsprechenden Multimediameldung erlaubt, wobei das Rückgewinnungsmodul daher Informationen kennt, die es ihm erlauben, den Relaisserver abzufragen, um die erzeugten Multimediamitteilungen zurückzugewinnen,
- das Rückgewinnungsmodul eine Rückgewinnungsanfrage (340) erzeugt, um die Multimediamitteilung zurückzugewinnen, die der zweiten Bekanntgabemeldung entspricht, wobei das Rückgewinnungsmodul die Rückgewinnungsanfrage zu dem Relaisserver sendet und die Antwort des Relaisservers verarbeitet.

2. Verfahren nach Anspruch 1, **dadurch gekennzeichnet, dass**:
- das Erzeugungsmodul einem Analysemodul (203) erste Informationen über die von dem Erzeugungsmodul gesendeten Multimediamitteilungen überträgt,
- das Rückgewinnungsmodul dem Analysemodul zweite Informationen über die rückgewonnenen Multimediamitteilungen überträgt,
- die ersten und zweiten Informationen der gleichen Art sind.

3. Verfahren nach einem der Ansprüche 1 oder 2, **dadurch gekennzeichnet, dass** die Multimediamitteilung eine MMS-Mitteilung ist.

4. Verfahren nach einem der Ansprüche 1 bis 3, **dadurch gekennzeichnet, dass** die erste Bekanntgabemeldung eine Kurzmeldung ist.

5. Verfahren nach einem der Ansprüche 1 bis 4, **dadurch gekennzeichnet, dass** die Rückgewinnungsanfrage unter Verwenden des WAP-Protokolls gesendet wird.

6. Verfahren nach einem der Ansprüche 1 bis 7, **dadurch gekennzeichnet, dass** das Objektfeld der Multimediamitteilung eine Datumsinformation (312) enthält.

7. Verfahren nach einem der Ansprüche 1 bis 6, **dadurch gekennzeichnet, dass** die verschiedenen Module synchronisiert sind.

8. Verfahren nach einem der Ansprüche 1 bis 7, **dadurch gekennzeichnet, dass** das Objektfeld der automatisch erzeugten Multimediamitteilung eine Prüfsummeninformation (314) aufweist, die einem Körper der automatisch erzeugten Multimediamitteilung entspricht.

9. Verfahren nach einem der Ansprüche 1 bis 8, **dadurch gekennzeichnet, dass** das Objektfeld der automatisch erzeugten Multimediamitteilung eine Identifikationsinformation (311) der automatisch erzeugten Multimediamitteilung enthält.

10. Verfahren nach einem der Ansprüche 1 bis 9, **dadurch gekennzeichnet, dass** das Objektfeld der automatisch erzeugten Multimediamitteilung einen Anweisungscode (313) erzeugt, um das Verhalten des Rückgewinnungsmoduls festzulegen.

11. Verfahren nach einem der Ansprüche 1 bis 10, **dadurch gekennzeichnet, dass** das Abfangmodul die von dem Relaisserver gesendeten Daten verarbeitet.

12. Verfahren nach einem der Ansprüche 1 bis 11, **dadurch gekennzeichnet, dass** das Abfangmodul die von einem SMS-C des Telekommunikationsnetzes gesendeten Daten verarbeitet.

13. Verfahren nach einem der Ansprüche 1 bis 12, **dadurch gekennzeichnet, dass** die Multimediameldung einen Körper (305) aufweist, dessen Inhalt in Größe und/oder Beschaffenheit veränderlich ist.

14. Verfahren nach einem der Ansprüche 1 bis 13, **dadurch gekennzeichnet, dass** das Erzeugungsmodul Multimediameldungen mit einer gegebenen Frequenz sendet.

15. Verfahren nach einem der Ansprüche 1 bis 14, **dadurch gekennzeichnet, dass** das Erzeugungsmodul Multimediamitteilungen während einer gegebenen Periode sendet.

16. Verfahren nach einem der Ansprüche 1 bis 15, **dadurch gekennzeichnet, dass** das Erzeugungsmodul Multimediamitteilungen über verschiedene Protokolle sendet.

17. Verfahren nach einem der Ansprüche 1 bis 16, **dadurch gekennzeichnet, dass** die Bekanntgabemitteilungen Identifikationsinformationen (335, 343) der von dem Relaisserver, mit dem sie korrespondieren, empfangenen Multimediamitteilung enthalten.

18. Verfahren nach einem der Ansprüche 1 bis 17, **dadurch gekennzeichnet, dass** das Erzeugungsmodul ein Zwischenelement zwischen einem Server (208) eines Dienstleistungsanbieters und dem Relaisserver ist, wobei das Erzeugungsmodul daher die Objektfelder der von ihm abgefangenen Multimediamittelungen modifiziert.

19. Verfahren nach einem der Ansprüche 1 bis 18, **dadurch gekennzeichnet, dass** das Erzeugungsmodul über eine Scriptdatei parametriert ist.

20. Verfahren nach einem der Ansprüche 1 bis 19, **dadurch gekennzeichnet, dass** das Erzeugungsmodul und/oder das Rückgewinnungsmodul eine Multiprozess-Softwarearchitektur haben.

21. Modulare Vorrichtung zum Mitverfolgen einer Multimediameldung durch ein Telekommunikationsnetz, umfassend einen Relaisserver (204) für Multimediamitteilungen, wobei eine Multimediamitteilung ein Empfängerfeld und ein Objektfeld enthält, **dadurch gekennzeichnet, dass** sie Folgendes enthält:
- ein Erzeugungsmodul (201), um automatisch eine Mitteilung zu erzeugen,
- wobei das Erzeugungsmodul Mittel aufweist, um in das Objektfeld der Multimediameldung Informationen in Zusammenhang mit der automatisch erzeugten Multimediameldung einzufügen,
- wobei das Erzeugungsmodul Mittel aufweist, um die erzeugte Multimediamitteilung über das Telekommunikationsnetz zu senden,
- wobei der Relaisserver Mittel aufweist, um eine erste Bekanntgabemitteilung des Empfangs der Multimediamitteilung zu erzeugen und zu einem durch das Empfängerfeld identifizierten Empfänger zu senden, wobei die erste Bekanntgabemitteilung ein Objektfeld enthält, dessen Inhalt mindestens die Informationen des Objektfelds der Multimediamitteilung enthält,
- wobei ein Abfangmodul (206) Mittel aufweist, um die erste Bekanntgabemeldung abzufangen, zu bestimmen, wer der Empfänger der ersten Bekanntgabemeldung ist und sich in Abhängigkeit von dem Empfänger in dem Telekommunikationsnetz transparent zu verhalten,
**dadurch gekennzeichnet, dass**:
- das Abfangmodul (206) alternativ Mittel aufweist, um eine zweite Bekanntgabemeldung zu einem Rückgewinnungsmodul (202) von Multimediamitteilungen zu senden, wobei die zweite Bekanntgabemitteilung mindestens ein Objektfeld enthält, dessen Inhalt die Identifikation der Multimediamitteilung erlaubt, die der ersten Bekanntgabemitteilung entspricht, wobei das Rückgewinnungsmodul daher Informationen kennt, die es ihm erlauben, den Relaisserver abzufragen, um die erzeugten Multimediamitteilungen zurückzugewinnen,
- das Rückgewinnungsmodul Mittel aufweist, um eine Rückgewinnungsanfrage zu erzeugen, um die Multimediamitteilung zurückzugewinnen, die der ersten Bekanntgabemitteilung entspricht, wobei das Rückgewinnungsmodul auch Mittel aufweist, um die Rückgewinnungsanfrage zu dem Relaisserver zu senden und die Antwort des Relaisservers zu verarbeiten.

22. Vorrichtung nach Anspruch 21, **dadurch gekennzeichnet, dass**:
- das Erzeugungsmodul Mittel aufweist, um einem Analysemodul (203) erste Informationen zu den Multimediamitteilungen, die von dem Erzeugungsmodul gesendet werden, zu übertragen,
- das Rückgewinnungsmodul Mittel aufweist, um dem Analysemodul zweite Informationen über zurückgewonnene Multimediamitteilungen zu übertragen,
- die ersten und zweiten Informationen gleicher Art sind.
